# FASCICULE DE BREVET EUROPEEN

(11) **EP 2 815 934 B1**
(45) Date de publication et mention de la délivrance du brevet: **30.01.2019**
(21) Numéro de dépôt: 14172475.7
(22) Date de dépôt: 16.06.2014
(51) Int. Cl.: B60S 1/38

(54) **Balai d'essuie-glace**
Scheibenwischblatt
Windscreen wiper blade

(30) Priorité: 19.06.2013 FR 1355805
(43) Date de publication de la demande: 24.12.2014
(73) Titulaire: Valeo Systèmes d'Essuyage, 78322 Le Mesnil Saint Denis (FR)
(72) Inventeur: Bousset, Xavier, 63115 MEZEL (FR); Caillot, Gérald, 78720 CERNAY LA VILLE (FR); Grasso, Giuseppe, 63340 Le Breuil sur Couze (FR); Thebault, Denis, 63000 Clermont Ferrand (FR)
(74) Mandataire: Callu-Danseux, Violaine

(56) Documents cités:
- EP-A1- 2 415 645
- DE-A1- 19 801 058
- DE-A1-102011 001 874
- DE-U1-202006 009 435
- US-A1- 2010 024 151
- US-A1- 2012 117 746

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par des bras ou porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur.

La demande de brevet FR2963595A1 divulgue un balai d'essuie-glace comportant une monture de support d'orientation principale longitudinale et une lame d'essuyage qui est portée par ladite monture. La monture comporte un corps tubulaire supérieur contenant une vertèbre de cintrage et un logement inférieur, ouvert, contenant un talon supérieur de montage de la lame d'essuyage. La fixation d'un déflecteur aérodynamique sur ladite monture de support est réalisée par clippage dans des rainures prévues latéralement sur la monture de support.

Le corps tubulaire supérieur, ou logement supérieur, peut se présenter fermé, comme dans la demande de brevet FR2963595A1. Il est aussi connu de le prévoir sensiblement ouvert selon ladite direction longitudinale. Cela permet d'accroitre la flexibilité de la monture de support. Cependant, en cas de conditions climatiques extrêmes, par exemple par grands froids, l'ouverture pratiquée sur le logement supérieur de la monture de support ne suffit pas à donner la flexibilité requise à ladite monture de support.

DE102011001874 divulgue un balai d'essuie-glace comprenant des premiers moyens destinés à recevoir une vertèbre et des seconds moyens destinés à retenir un déflecteur dudit balai. EP-A-2415645 montre le préambule de la revendication 1.

L'invention a pour but de proposer une monture de support pour balai d'essuie-glace dont la flexibilité est renforcée, quel que soit l'environnement climatique du balai d'essuie-glace.

A cet effet, l'invention a pour objet une monture de support pour balai d'essuie-glace, ladite monture comprenant un corps présentant une direction d'extension longitudinale, dite orientation principale longitudinale, ledit corps comprenant des premiers moyens destinés à recevoir une vertèbre de cintrage et des seconds moyens destinés à retenir un déflecteur dudit balai.

Selon l'invention, lesdits seconds moyens comportent des évidements facilitant le cintrage de ladite vertèbre.

Ainsi, la monture de support présente une flexibilité renforcée dans le sens longitudinal et en torsion par rapport à des montures sans évidements au niveau desdits seconds moyens, que le logement supérieur de ladite monture soit fermé ou ouvert.

D'autre part, l'assemblage entre la monture de support et le déflecteur aérodynamique est facilité. En effet, cet assemblage est d'abord réalisé par clippage de contre-formes du déflecteur à l'intérieur de rainures, ou ailettes, prévues latéralement sur la monture de support, puis par coulissement mutuel.

Les évidements réalisés sur les moyens de la monture destinés à retenir le déflecteur permettent de réduire la friction entre ces deux éléments, en particulier lors de leur assemblage.

Selon différents modes de réalisation de l'invention, qui pourront être pris ensemble ou séparément :
- chacun desdits évidements est réalisé selon une direction sensiblement transversale, notamment orthogonale, à ladite direction d'extension longitudinale,
- lesdits seconds moyens sont des ailettes latérales comprenant chacune un harpon de fixation destiné à coopérer avec un harpon complémentaire agencé sur une branche dudit déflecteur,
- lesdits premiers moyens comprennent un premier logement, dit logement supérieur, pour ladite vertèbre,
- ledit logement supérieur est ouvert, au moins en partie, en son milieu, selon la direction d'extension longitudinale,
- ledit logement supérieur présente une partie supérieure ouverte sans interruption sur toute la longueur de ladite monture, de préférence en son milieu,
- ledit logement supérieur comporte des évidements, dits évidements complémentaires, chacun desdits évidements étant réalisé selon une direction sensiblement transversale, notamment orthogonale, à ladite direction d'extension longitudinale,
- chacun desdits évidements complémentaires traverse ledit logement supérieur dans son épaisseur,
- lesdits évidements complémentaires forment des découpes incomplètes sur des parois latérales dudit logement supérieur,
- ladite monture comprend en outre des crochets, dits crochets longitudinaux, qui définissent un second logement, dit logement inférieur, ledit logement inférieur étant ouvert pour accueillir un talon supérieur de montage d'une lame d'essuyage du balai,
- ledit logement inférieur et ledit logement supérieur sont séparés par une paroi commune,
- ledit corps est symétrique par rapport à un plan de symétrie appartenant audit corps, ledit plan de symétrie étant orienté selon ladite direction d'extension longitudinale, de sorte que lesdits évidements sont présents de part et d'autre de la ladite monture,
- ladite monture est en matériau plastique,
- ladite monture est en Polypropylène (PP),
- ledit deuxième logement supérieur, ou ladite vertèbre, est apte à recevoir un élément de chauffage,
- ledit élément de chauffage s'étend dans ladite direction d'extension longitudinale, le long de la monture de support.

L'invention concerne aussi un balai d'essuie-glace comprenant une monture telle que décrite ci-dessus, une vertèbre de cintrage et une lame d'essuyage, et de préférence aussi un déflecteur. Il s'agit ici préférablement d'un balai de type plat (aussi appelé « flat blade »), c'est-à-dire dépourvu de palonnier.

L'invention concerne aussi un système d'essuyage comprenant un tel balai.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- la figure 1 est une vue en perspective d'un premier exemple de réalisation d'une monture selon l'invention,
- la figure 2 reprend la figure 1 et permet de visualiser, en outre, un déflecteur et une vertèbre,
- la figure 3 est une vue de côté d'un second exemple de réalisation de monture selon l'invention,
- la figure 4 est une vue en perspective de la monture de la figure 3.

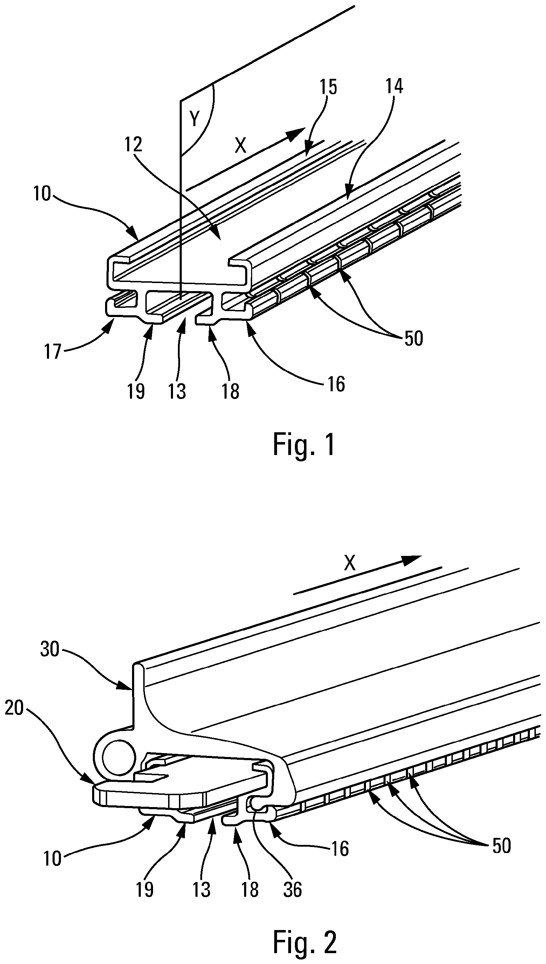

Comme illustrée aux différentes figures, l'invention concerne une monture de support 10 pour balai d'essuie-glace. La monture 10 de l'invention comprend un corps d'orientation principale longitudinale. Ladite orientation longitudinale est aussi celle du balai d'essuie-glace ; elle est repérée par la direction X sur les figures 1 à 4. Le corps de la monture 10 comprend des premiers moyens destinés à recevoir une vertèbre de cintrage 20. La vertèbre de cintrage 20 donne la rigidité nécessaire au plaquage du balai d'essuie-glace sur un pare-brise de véhicule et assure le maintien de la lame d'essuyage 40 sur toute sa longueur. Le corps de la monture comprend aussi des seconds moyens destinés à retenir un déflecteur 30 dudit balai. Le déflecteur 30 assure l'aérodynamisme du balai d'essuyage.

Les premiers moyens destinés à recevoir la vertèbre de cintrage 20 peuvent être réalisés de différentes manières. Il pourra s'agir d'un logement supérieur fermé, destiné à contenir la vertèbre de cintrage. Comme illustré, le logement supérieur 12 pourra aussi être ouvert, en son milieu, selon la direction d'extension longitudinale X. De préférence, ledit logement supérieur 12 présente une partie supérieure ouverte sans interruption sur toute la longueur de ladite monture 10. Ledit logement supérieur 12 présente alors des parois latérales 14, 15 sous forme de crochets de retenue pour la vertèbre 20. Avantageusement, ces crochets présentent une section transversale sensiblement en forme de « L » tourné à 180° respectivement en sens horaire et antihoraire, et sont opposés symétriquement par rapport à un plan de symétrique Y dudit corps. Ladite partie supérieure ouverte présente ainsi une largeur inférieure à la largeur du logement supérieur 12, lorsque ces largeurs sont mesurées dans des plans parallèles.

Les seconds moyens, quant à eux, sont destinés à retenir le déflecteur 30 dudit balai. Ces seconds moyens sont des ailettes latérales 16, 17 comprenant chacune un harpon de fixation destiné à coopérer avec un harpon complémentaire agencé sur une branche 36 dudit déflecteur 30. Lesdites ailettes latérales 16, 17 s'étendent ici parallèlement à un bord inférieur des crochets de retenue de la vertèbre 20.

Bien que la monture de support 10 soit prévue afin de donner la rigidité au balai d'essuyage, il est aussi intéressant que ladite monture 10 soit flexible. En effet, celle-ci est aussi prévue pour adapter le plaquage du balai en fonction du pare-brise à essuyer. Les montures de support 10 de l'art antérieur ne présentent pas en effet une flexibilité satisfaisante. C'est pourquoi, selon l'invention, lesdits seconds moyens comportent, en outre, des évidements facilitant le cintrage de ladite monture 10.

Lesdits évidements 50 sont visibles, dans un premier exemple de réalisation de l'invention, sur les figures 1 et 2. Lesdits évidements 50 sont réalisés selon une direction sensiblement transversale à ladite direction d'extension longitudinale X. Ils sont de préférence régulièrement espacés les uns des autres.

Ainsi, la monture selon l'invention présente une flexibilité renforcée, d'une part grâce à l'ouverture du premier logement dit logement supérieur 12 et, d'autre part, grâce aux évidements 50 pratiqués régulièrement le long des ailettes latérales 16, 17. Il en résulte une monture 10 flexible dans le sens longitudinal X, mais aussi flexible en torsion.

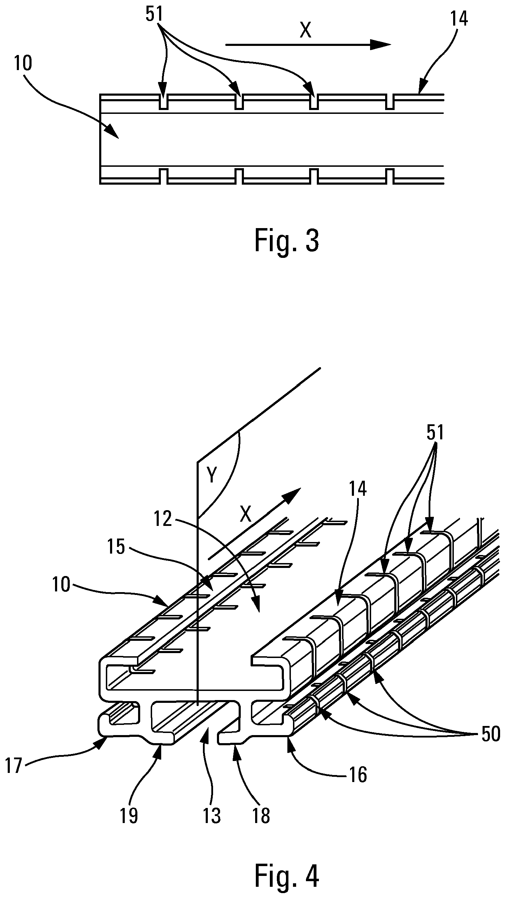

Comme cela est visible sur les figures 3 et 4, dans un second exemple de réalisation de l'invention, les évidements 50 pourront être complétés par des évidements 51 réalisés sur les parois latérales 14, 15 du logement supérieur 12, en particulier lorsque celui-ci est ouvert. Ces évidements 51 seront appelés évidements complémentaires par la suite.

Tout comme les évidements 50 prévus sur les ailettes latérales 16, 17, lesdits évidements complémentaires 51 seront réalisés selon une direction sensiblement transversale à ladite direction d'extension longitudinale X. Ils traverseront, de plus, ledit logement supérieur 12 dans son épaisseur. Ils pourront en particulier former des découpes incomplètes sur les parois latérales 14, 15 du logement supérieur 12. Autrement dit, les découpes 51 laissent de la matière à leurs extrémités, le long de bords libres desdits crochets de retenue de la vertèbre.

Il est à noter que les évidements 51 complémentaires pourront aussi être réalisés sur les parois latérales du logement supérieur 12, même si celui-ci est fermé (exemple de réalisation non représenté).

Lesdits évidements complémentaires 51 sont de préférence régulièrement espacés les uns des autres, par exemple suivant le même pas que les évidements 50 prévus sur les ailettes latérales 16, 17. Les évidements complémentaires 51 pourront également être situés dans un même plan que les évidements 50 prévus sur les ailettes latérales 16, 17, au moins pour certains d'entre eux.

Comme cela est visible sur les figures, la monture 10 de l'invention comprend, en outre, des crochets 18, 19, dits crochets longitudinaux, qui présentent une direction d'extension sensiblement parallèle à ladite direction d'extension longitudinale. Ils s'étendent ici depuis une paroi commune aux logements supérieur 12 et inférieur 13, de laquelle sont également issus lesdits crochets de maintien de la vertèbre 20. Avantageusement, ces crochets longitudinaux 18, 19 présentent une section transversale sensiblement en forme de « L », et sont opposés symétriquement par rapport à un plan de symétrique Y de ladite monture 10. Ledit logement inférieur 13 présente alors une partie inférieure ouverte sans interruption sur toute la longueur de ladite monture 10. Cette partie inférieure ouverte présente une largeur inférieure à la largeur du logement inférieur 13, lorsque ces largeurs sont mesurées dans des plans parallèles. Le logement inférieur 13 est ouvert pour accueillir un talon supérieur de montage d'une lame d'essuyage du balai, non-représentée mais bien connue de l'homme du métier.

On peut aussi constater, sur l'ensemble des figures, que ledit logement inférieur 13 est situé de manière opposée au logement supérieur 12, et ce par rapport aux ailettes latérales 16, 17. En d'autres termes, le logement supérieur 12 et le logement inférieur 13 sont séparés par une paroi commune. Les ailettes latérales 16, 17 s'étendent ici depuis un bord latéral desdits crochets longitudinaux 18,19, définissant le second inférieur 13 qui prennent eux-mêmes naissance depuis une base du logement supérieur 12. Ladite base est prolongée de part et d'autre par lesdits crochets de retenue de la vertèbre.

Un plan de symétrie Y est représenté sur les figures. Virtuellement, ce plan de symétrie Y est celui par rapport auquel le corps de ladite monture 10 est obtenu. On comprend ainsi que les évidements 50 prévus sur les ailettes latérales 16, 17 et les éventuels évidements complémentaires 51 sont situés les uns en face des autres de part et d'autre dudit plan de symétrie.

Il sera préférable de fabriquer la monture de support 10 en matériau plastique ; bien que tout autre matériau soit possible, par exemple un matériau métallique. Dans le cas présent, les évidements 50, 51 pourront être aisément prévu lors de la fabrication de ladite monture 10 en un matériau plastique de type Polypropylène (PP).

Il est à noter que des variantes de réalisation sont bien sûr possibles. Notamment il est aussi possible, dans un mode de réalisation supplémentaire, que le logement supérieur 12, en particulier ladite vertèbre 20, soit apte à recevoir un élément de chauffage (mode de réalisation non représenté). Dans ce mode de réalisation, ledit élément de chauffage serait tel qu'il s'étendrait dans la direction d'extension longitudinale X, le long de la monture de support 10.

Quelque soit le mode de réalisation, l'invention qui vient d'être décrite trouvera une application préférée pour les balais d'essuie-glace des systèmes d'essuyage pour véhicule à moteur.

## Revendications

1. Monture de support (10) pour balai d'essuie-glace, ladite monture (10) comprenant un corps présentant une direction d'extension longitudinale (X), ledit corps comprenant des premiers moyens destinés à recevoir une vertèbre de cintrage (20) et des seconds moyens destinés à retenir un déflecteur (30) dudit balai, lesdits seconds moyens étant des ailettes latérales (16, 17) comprenant chacune un harpon de fixation destiné à coopérer avec un harpon complémentaire agencé sur une branche (36, 37) dudit déflecteur (30) **caractérisé par le fait que** les ailettes latérales comportent des évidements (50, 51) facilitant le cintrage de ladite vertèbre.

2. Monture (10) selon la revendication précédente, dans laquelle chacun desdits évidements (50, 51) est réalisé selon une direction sensiblement transversale à ladite direction d'extension longitudinale (X).

3. Monture (10) selon l'une quelconque des revendications précédentes, dans laquelle lesdits premiers moyens comprennent un premier logement (12), dit logement supérieur, pour ladite vertèbre (20).

4. Monture (10) selon la revendication précédente, dans laquelle ledit logement supérieur (12) est ouvert, au moins en partie, en son milieu, selon ladite direction d'extension longitudinale (X).

5. Monture (10) selon l'une quelconque des revendications 3 et 4, dans laquelle ledit logement supérieur (12) présente une partie supérieure ouverte sans interruption sur toute la longueur de ladite monture (10).

6. Monture (10) selon l'une quelconque des revendications 3 à 5, dans laquelle ledit logement supérieur (12) comporte des évidements (51), dits évidements complémentaires, chacun desdits évidements complémentaires (51) étant réalisé selon une direction sensiblement transversale à ladite direction d'extension longitudinale (X).

7. Monture (10) selon la revendication précédente, dans laquelle chacun desdits évidements complémentaires (51) traverse ledit logement supérieur (12) dans son épaisseur.

8. Monture (10) selon l'une quelconque des revendications 6 ou 7, dans laquelle lesdits évidements complémentaires (51) forment des découpes incomplètes sur des parois latérales (14, 15) dudit logement supérieur (12).

9. Monture (10) selon l'une quelconque des revendications précédentes, comprenant en outre des crochets (18, 19), dits crochets longitudinaux, qui définissent un second logement (13), dit logement inférieur, ledit logement inférieur (13) étant ouvert pour accueillir un talon supérieur (43) de montage d'une lame d'essuyage (40) du balai.

10. Monture (10) selon la revendication précédente, dans laquelle ledit logement inférieur (13) et ledit logement supérieur (12) sont séparés par une paroi commune.

11. Monture (10) selon l'une quelconque des revendications précédentes, dans laquelle ledit corps est symétrique par rapport à un plan de symétrie (Y) appartenant audit corps, ledit plan de symétrie (Y) étant orienté selon ladite direction d'extension longitudinale (X).

12. Balai d'essuie-glace comprenant une monture (10) telle que définie dans l'une quelconque des revendications précédentes, une vertèbre de cintrage (20) et une lame d'essuyage, et de préférence un déflecteur (30).

13. Système d'essuyage comprenant un balai tel que défini dans la revendication précédente.

## Patentansprüche

1. Tragrahmen (10) für ein Scheibenwischblatt, wobei der Rahmen (10) einen Körper umfasst, der eine Längsausdehnungsrichtung (X) aufwiest, wobei der Körper erste Mittel, die dazu bestimmt sind, eine Federschiene (20) aufzunehmen, und zweite Mittel umfasst, die dazu bestimmt sind, ein Ablenkblech (30) des Wischblatts zu halten, wobei die zweiten Mittel Seitenflügel (16, 17) sind, jeweils umfassend ein Befestigungsprofil, das dazu bestimmt ist, mit einem komplementären Profil zusammenzuwirken, das auf einem Schenkel (36, 37) des Ablenkblechs (30) angeordnet ist, **dadurch gekennzeichnet, dass** die Seitenflügel Ausnehmungen (50, 51) umfassen, die das Biegen der Federschiene erleichtern.

2. Rahmen (10) nach dem vorhergehenden Anspruch, bei dem jede der Ausnehmungen (50, 51) in eine Richtung im Wesentlichen quer zur Längsausdehnungsrichtung (X) hergestellt ist.

3. Rahmen (10) nach einem der vorhergehenden Ansprüche, bei dem die ersten Mittel eine erste Aufnahme (12), obere Aufnahme genannt, für die Federschiene (20) umfassen.

4. Rahmen (10) nach dem vorhergehenden Anspruch, bei dem die obere Aufnahme (12) zumindest teilweise in ihrer Mitte in Längsausdehnungsrichtung (X) offen ist.

5. Rahmen (10) nach einem der Ansprüche 3 und 4, bei dem die obere Aufnahme (12) einen offenen oberen Teil ohne Unterbrechung auf der gesamten Länge des Rahmens (10) aufweist.

6. Rahmen (10) nach einem der Ansprüche 3 bis 5, bei dem die obere Aufnahme (12) Ausnehmungen (51), komplementäre Ausnehmungen genannt, umfasst, wobei jede der komplementären Ausnehmungen (51) in eine Richtung im Wesentlichen quer zur Längsausdehnungsrichtung (X) hergestellt ist.

7. Rahmen (10) nach dem vorhergehenden Anspruch, bei dem jede der komplementären Ausnehmungen (51) die obere Aufnahme (12) in ihrer Dicke durchquert.

8. Rahmen (10) nach einem der Ansprüche 6 oder 7, bei dem die komplementären Ausnehmungen (51) unvollständige Ausschnitte an Seitenwänden (14, 15) der oberen Aufnahme (12) bilden.

9. Rahmen (10) nach einem der vorhergehenden Ansprüche, ferner umfassend Haken (18, 19), Längshaken genannt, die eine zweite Aufnahme (13), untere Aufnahme genannt, definieren, wobei die untere Aufnahme (13) offen ist, um ein oberes Montageendstück (43) einer Wischleiste (40) des Wischblatts aufzunehmen.

10. Rahmen (10) nach dem vorhergehenden Anspruch, bei dem die untere Aufnahme (13) und die obere Aufnahme (12) durch eine gemeinsame Wand getrennt sind.

11. Rahmen (10) nach einem der vorhergehenden Ansprüche, bei dem der Körper zu einer Symmetrieebene (Y), die dem Körper angehört, symmetrisch ist, wobei die Symmetrieebene (Y) in die Längsausdehnungsrichtung (X) ausgerichtet ist.

12. Scheibenwischblatt, umfassend einen Rahmen (10), wie in einem der vorhergehenden Ansprüche definiert, eine Federschiene (20) und eine Wischleiste und vorzugsweise ein Ablenkblech (30).

13. Scheibenwischsystem, umfassend ein Wischblatt, wie in dem vorhergehenden Anspruch definiert.

## Claims

1. Support mount (10) for a windscreen wiper, said mount (10) comprising a body having a longitudinal extension direction (X), said body comprising first means designed to receive a curving vertebra (20) and second means designed to hold a deflector (30) of said wiper, said second means being lateral flanges (16, 17) each comprising a securing lip designed to engage with a complementary lip arranged on a branch (36, 37) of said deflector (30) **characterized in that** the lateral flanges comprise notches (50, 51) making it easier for said vertebra to curve.

2. Mount (10) according to the preceding claim, in which each of said notches (50, 51) is produced in a direction substantially transverse to said longitudinal extension direction (X).

3. Mount (10) according to any one of the preceding claims, in which said first means comprise a first housing (12), termed the upper housing, for said vertebra (20).

4. Mount (10) according to the preceding claim, in which said upper housing (12) is open, at least in part, at its centre, along said longitudinal extension direction (X).

5. Mount (10) according to either one of Claims 3 and 4, in which said upper housing (12) has a continuous open upper part over the entire length of said mount (10).

6. Mount (10) according to any one of Claims 3 to 5, in which said upper housing (12) comprises notches (51), termed complementary notches, each of said complementary notches (51) being created in a direction substantially transverse to said longitudinal extension direction (X).

7. Mount (10) according to the preceding claim, in which each of said complementary notches (51) passes through the thickness of said upper housing (12) .

8. Mount (10) according to either one of Claims 6 and 7, in which said complementary notches (51) form incomplete cut-outs on sidewalls (14, 15) of said upper housing (12).

9. Mount (10) according to any one of the preceding claims, further comprising hooks (18, 19), termed longitudinal hooks, which define a second housing (13), termed lower housing, said lower housing (13) being open so as to receive an upper mounting heel (43) of a wiping blade (40) of the wiper.

10. Mount (10) according to the preceding claim, in which said lower housing (13) and said upper housing (12) are separated by a common wall.

11. Mount (10) according to any one of the preceding claims, in which said body is symmetric with respect to a plane of symmetry (Y) belonging to said body, said plane of symmetry (Y) being oriented along said longitudinal extension direction (X).

12. Windscreen wiper comprising a mount (10) as defined in any one of the preceding claims, a curving vertebra (20) and a wiping blade, and preferably a deflector (30) .

13. Wiping system comprising a wiper as defined in the preceding claim.
